# FASCICULE DE BREVET EUROPEEN

(11) **EP 4 106 277 B1**
(45) Date de publication et mention de la délivrance du brevet: **10.09.2025**
(21) Numéro de dépôt: 22177645.3
(22) Date de dépôt: 07.06.2022
(51) Int. Cl.: H04L 12/28, H04L 12/66, H04W 52/02, H04W 84/12, H04W 88/16

(54) **PROCÉDÉ D ACTIVATION D'UNE INTERFACE DE COMMUNICATION D'UNE PASSERELLE RÉSIDENTIELLE DANS UN RÉSEAU DE COMMUNICATION LOCAL, ÉQUIPEMENT ET PROGRAMME D ORDINATEUR CORRESPONDANTS**
VERFAHREN ZUM AKTIVIEREN EINER KOMMUNIKATIONSSCHNITTSTELLE EINES GATEWAYS FÜR WOHNGEBÄUDE IN EINEM LOKALEN KOMMUNIKATIONSNETZ, ENTSPRECHENDE AUSRÜSTUNG UND ENTSPRECHENDES COMPUTERPROGRAMM
METHOD FOR ACTIVATING A COMMUNICATION INTERFACE OF A HOME GATEWAY IN A LOCAL COMMUNICATION NETWORK, CORRESPONDING DEVICE AND COMPUTER PROGRAM

(30) Priorité: 14.06.2021 FR 2106224
(43) Date de publication de la demande: 21.12.2022
(73) Titulaire: Orange, 92130 Issy-les-Moulineaux (FR)
(72) Inventeur: GLOANEC, Simon, 92326 CHATILLON (FR); LE FOLL, Morgane, 92326 CHATILLON (FR); LE MAT, Didier, 92326 CHATILLON (FR)
(74) Mandataire: Vidon Brevets & Stratégie

(56) Documents cités:
- EP-A1- 1 895 713
- EP-A2- 2 608 454
- WO-A1-2010/044714

## Description

### 1. Domaine de l'invention

Le domaine de l'invention est celui d'un réseau de communication local domestique ou professionnel, géré par une passerelle, dite passerelle résidentielle, à laquelle sont connectés des équipements utilisateurs.

En particulier, l'invention concerne l'activation d'une ou plusieurs interface(s) de communication de type filaire ou sans fil préalablement désactivée(s) de la passerelle résidentielle, en fonction de l'utilisation réelle de celle(s)-ci.

### 2. Art antérieur et ses inconvénients

Une grande majorité de foyers sont équipés d'une passerelle résidentielle, souvent appelée « box » ou « Home Gateway » (HGW) (« passerelle résidentielle » en anglais). Cet équipement, installé chez le client, est l'élément concentrateur de l'ensemble des connexions, services et applications fournis par l'opérateur. En effet, la passerelle est raccordée, d'une part, au réseau de l'opérateur, et présente, d'autre part, un ensemble d'interfaces, sans fil ou filaires, permettant la connexion d'une pluralité d'équipements au sein d'un réseau de communication local, tels que par exemple un décodeur numérique (« Set-Top Box » en anglais ou STB), un ordinateur, un téléphone, un téléviseur numérique, etc.

Par la suite, le terme « interface » est utilisé pour désigner aussi bien un composant logiciel, qu'un composant matériel ou un ensemble de composants matériels et logiciels.

La passerelle résidentielle comprend plusieurs interfaces de communication lui permettant d'établir une connexion avec les différents équipements du réseau de communication grâce à différents protocoles de communication comme par exemple WiFi^{®}, Bluetooth, Bluetooth à faible énergie (ou « *Bluetooth Low Energy* » en anglais ou BLE) etc.... Ces interfaces de communication consomment plus ou moins d'énergie en fonction du protocole de communication mis en œuvre.

Le WiFi^{®}, pour «*Wireless Fidelity*» en anglais, est une technologie qui permet notamment une connexion sans fil entre plusieurs équipements au sein d'un réseau de communication sans fil (« *Wireless Local Area Network* » en anglais, ou WLAN), comme par exemple entre une passerelle résidentielle et des équipements utilisateur, via notamment une interface de communication sans fil de type WiFi présente au sein de la passerelle.

Actuellement, les fréquences du WiFi sont les bandes 2,4 GHz et 5 GHz. La plupart des passerelles résidentielles utilisent une technologie dite à deux bandes (« *dual-band* » en anglais) basée sur l'utilisation des deux fréquences WiFi 2,4 GHz et 5 GHz.

Lorsqu'ils sont connectés via une connexion sans fil WiFi à la passerelle résidentielle, les équipements du réseau de communication local utilisent principalement la fréquence 2,4 GHz. Certains équipements sont toutefois capables de se connecter à la fréquence 5 GHz, introduite plus récemment dans le réseau, et qui offre un débit plus élevé : c'est le cas par exemple du décodeur numérique.

De nos jours, le citoyen est de plus en plus soucieux de l'avenir de la planète, ce qui l'amène à tenter de diminuer le gaspillage des ressources énergétiques.

Dans la maison ou l'entreprise connectée, la baisse de la consommation énergétique passe par l'arrêt ou la mise en veille des équipements non utilisés ou au moins certains de leurs composants, applications ou interfaces. En particulier, une des pistes d'optimisation de la consommation électrique des composants de la passerelle résidentielle est d'activer ou de désactiver de manière dynamique certaines interfaces de communication de la passerelle afin de ne garder active que celle qui est réellement utile pour l'utilisateur final.

En d'autres termes, afin de limiter la consommation d'énergie, les interfaces de communications gourmandes en énergie sont désactivées par défaut, alors que les interfaces peu consommatrices en énergie restent activées.

À l'heure actuelle, dans le cas de l'interface WiFi 5 GHz de la passerelle résidentielle, il n'existe pas de mécanisme de réactivation automatique de cette interface sur détection de la présence, dans le réseau de communication local, d'un équipement compatible avec la fréquence 5 GHz, comme par exemple un décodeur numérique.

Une des solutions est donc de réveiller périodiquement l'interface de communication WiFi 5 GHz de la passerelle résidentielle, par exemple toutes les trente secondes, afin de détecter la présence d'équipements compatibles dans le réseau de communication.

Ainsi, dans le cas de l'interface de communication WiFi 5 GHz de la passerelle résidentielle, cette dernière n'est activée que si l'utilisateur en a réellement besoin, c'est-à-dire lorsqu'il souhaite qu'un équipement du réseau de communication, comme par exemple le décodeur numérique, se connecte via cette fréquence WiFi au réseau de communication WLAN, et donc à la passerelle résidentielle, par exemple pour accéder à un service tel qu'un service de consommation de contenu numérique.

Toutefois, cette solution de réveil, ou activation, périodique induit une latence qui peut avoir un impact sur le ressenti de l'utilisateur. En effet, dans un exemple, si la détection d'un équipement compatible avec la fréquence WiFi 5 GHz est programmée pour s'effectuer toutes les 30 secondes, c'est-à-dire que l'interface de communication WiFi 5GHz est activée toutes les 30 secondes, cela signifie que l'équipement, comme par exemple le décodeur numérique, à son réveil, va devoir potentiellement attendre 30 secondes avant de se connecter au réseau de communication WLAN via la fréquence WiFi 5GHz.

Pour limiter cette latence, il est toujours possible de réduire cette fréquence de réveil de l'interface WiFi 5 GHz. Cependant, si la passerelle résidentielle doit relancer son interface WiFi 5 GHz très fréquemment, alors l'économie d'énergie est limitée.

Il existe donc un besoin d'une technique de réveil, ou d'activation, dynamique d'une interface de communication de la passerelle résidentielle, telle que l'interface de communication sans fil WiFi 5 GHz, qui ne présente pas cet inconvénient. Notamment, il existe un besoin d'une telle technique permettant d'améliorer la qualité d'expérience de l'utilisateur en limitant le temps de latence entre l'instant où l'utilisateur souhaite utiliser un équipement et celui où cet équipement se connecte au réseau de communication via une interface de communication préalablement désactivée de la passerelle résidentielle, tout en optimisant la consommation d'énergie.

Certains des documents pertinents de l'état de la technique sont: EP2608454A2, EP1895713A1 et WO2010/044714A1.

### 3. Présentation de l'invention

L'invention répond à ce besoin en proposant un procédé d'activation d'au moins une interface de communication d'une passerelle résidentielle d'un réseau de communication local auquel est connecté au moins un équipement principal configuré pour se connecter à ladite au moins une interface de communication de la passerelle résidentielle. Ce procédé est mis en œuvre par au moins un équipement secondaire configuré pour communiquer avec ledit au moins un équipement principal via un premier canal de communication sans fil, et avec la passerelle résidentielle via un deuxième canal de communication sans fil associé à au moins une autre interface de communication de la passerelle résidentielle. Ce procédé comprend :
- une transmission audit au moins un équipement principal, sur le premier canal de communication sans fil, d'un message de commande dudit au moins un équipement principal et,
- une transmission à la passerelle résidentielle, sur le deuxième canal de communication sans fil, d'une requête d'activation de ladite au moins une interface de communication.

Ainsi, l'invention repose sur une approche tout à fait nouvelle et inventive de l'activation, ou réveil, d'une interface de communication de la passerelle résidentielle désactivée par défaut, comme par exemple une interface de communication filaire de type Ethernet, ou sans fil de type WiFi 5GHz.

Plus particulièrement, lorsque l'utilisateur souhaite utiliser un équipement du réseau de communication, dit équipement principal, pour accéder à un service via la passerelle résidentielle nécessitant une connexion à une interface de communication désactivée de la passerelle, l'invention propose d'utiliser un autre équipement, dit équipement secondaire, configuré pour communiquer, d'une part, avec l'équipement principal, et, d'autre part, avec la passerelle résidentielle.

Pour cela, dans un premier temps, lorsque l'utilisateur souhaite utiliser l'équipement principal du réseau de communication, comme par exemple un décodeur numérique, l'utilisateur envoie un message de commande de cet équipement principal via un équipement secondaire configuré pour communiquer avec celui-ci, comme par exemple une télécommande contrôlant le décodeur numérique. Plus particulièrement, de manière classique et connue de l'art antérieur, sur demande de l'utilisateur, l'équipement secondaire transmet à l'équipement principal un message de commande de celui-ci. La transmission de ce message de commande peut se faire sur un canal de communication basé par exemple sur un protocole de communication de type Bluetooth à basse énergie (« *Bluetooth Low Energy* » en anglais ou BLE).

Afin de pouvoir accéder au service demandé par l'utilisateur, si l'équipement principal doit se connecter à une interface de communication de la passerelle, qui a été désactivée pour en limiter la consommation d'énergie, l'invention permet, de transmettre un message de commande à l'équipement principal sur un premier canal de communication sans fil, et de transmettre sur un deuxième canal de communication sans fil, une requête d'activation de l'interface de communication à laquelle l'équipement principal doit se connecter.

Dans l'exemple précédent, afin d'accéder à un service de consommation de contenu numérique, le décodeur numérique est configuré pour se connecter à une interface de communication de la passerelle résidentielle, en particulier à l'interface de communication sans fil WiFi 5GHz, qui est désactivée, lorsqu'elle n'est pas utilisée, pour limiter la consommation d'énergie.

Afin d'activer l'interface de communication sans fil WiFi 5GHz de la passerelle résidentielle, l'utilisateur utilise alors la télécommande du décodeur numérique, configurée pour communiquer avec le décodeur numérique et la passerelle résidentielle, via un canal de communication actif, comme par exemple un canal de communication BLE.

Ainsi, la télécommande transmet au décodeur numérique un message de commande du décodeur numérique, de manière classique et connue de l'art antérieur (par exemple par appui de l'utilisateur sur le bouton marche/arrêt de la télécommande). En outre, la télécommande transmet à la passerelle résidentielle une requête d'activation de l'interface de communication à laquelle le décodeur numérique doit se connecter, dans cet exemple l'interface de communication sans fil WiFi 5GHz de la passerelle résidentielle.

Ainsi, l'utilisateur envoie, via un équipement secondaire, ici la télécommande un message de commande à l'équipement principal, dans cet exemple le décodeur numérique, et une requête d'activation de l'interface de communication de la passerelle résidentielle permettant au décodeur numérique et à la passerelle résidentielle de communiquer ensemble, typiquement l'interface de communication WiFi 5GHz.

Ainsi, on supprime tout temps de latence entre le moment où l'équipement principal reçoit et traite son message de commande et le moment où l'interface de communication dont il a besoin sur la passerelle est activée.

L'activation de l'interface de communication, par exemple l'interface de communication sans fil WiFi 5GHz de la passerelle résidentielle, se fait donc uniquement en cas d'utilisation effective. L'activation/désactivation de cette interface de communication à la demande permet de diminuer la consommation électrique de la passerelle résidentielle, tout en évitant tout temps de latence néfaste pour l'équipement principal qui a besoin de s'y connecter.

Selon une caractéristique de l'invention, la requête d'activation de ladite au moins une interface de communication est transmise préalablement à la transmission audit au moins un équipement utilisateur principal du message de commande dudit au moins un équipement principal.

Avantageusement, la transmission de la requête d'activation de l'interface de communication désactivée de la passerelle résidentielle, préalablement à la transmission du message de commande de l'équipement principal, permet d'activer l'interface en question avant l'activation de l'équipement principal. Ainsi, l'équipement principal peut se connecter à l'interface de communication désormais active de la passerelle résidentielle sans temps de latence.

Selon une autre caractéristique de l'invention la requête d'activation de ladite au moins une interface de communication comprend une information d'activation de ladite au moins une interface de communication.

Avantageusement, cette information d'activation permet, par exemple, la modification d'une valeur d'une caractéristique de commande d'activation d'un profil propriétaire d'un protocole de communication de type BLE et ainsi l'activation de l'interface de communication d'intérêt.

Selon un aspect particulier de l'invention, la requête d'activation de ladite au moins une interface de communication comprend en outre une information d'identification de ladite au moins une interface de communication.

Avantageusement, cette information d'identification permet, par exemple, de modifier une valeur d'une caractéristique d'identification de l'interface de communication à activer d'un profil propriétaire dans un protocole de communication de type BLE et donc l'activation de l'interface de communication d'intérêt. En d'autres termes, dans le cas où plusieurs interfaces de communication différentes sont désactivées au sein de la passerelle résidentielle, il est possible de choisir si une ou plusieurs interfaces de communication doivent être activées et si oui, lesquelles.

Selon un autre aspect particulier de l'invention, le premier canal de communication sans fil et le deuxième canal de communication sans fil sont fondés sur un protocole de communication choisi parmi : Bluetooth, Bluetooth Low Energy, Z-wave, Zigbee, DECT-ULE, Li-Fi, 4G, 5G ou WiFi 6GHz.

Avantageusement, la passerelle résidentielle comprend différentes interfaces de communication sans fil lui permettant de communiquer via différents canaux de communication avec un ou plusieurs équipements principaux du réseau local et au moins un équipement secondaire configuré pour contrôler tout ou partie de ces équipements principaux. La passerelle peut, par exemple, être connectée à ces équipements via un canal de communication sans fil basé sur des protocoles de communication sans fil de type Bluetooth, Bluetooth Low Energy, z-wave, zigbee, DECT-ULE (pour « *Digital Enhanced Cordless Telecommnication-Ultra Low Energy* » en anglais ou télécommunications numériques améliorées sans fil à faible énergie), Li-Fi (pour « *Light Fidelity* » en anglais ou communication lumineuse visible), 4G, 5G, WiFi 6GHz etc. Avantageusement, les interfaces de communication sans fil associées à ces différents canaux de communication restent actives au sein de la passerelle résidentielle, par exemple parce qu'elles sont moins consommatrices en énergie.

Selon un autre aspect particulier de l'invention, le premier canal de communication sans fil et le deuxième canal de communication sans fil sont fondés sur un même protocole de communication.

L'invention concerne également un équipement configuré pour communiquer avec un équipement principal via un premier canal de communication sans fil, et avec une passerelle résidentielle d'un réseau de communication local auquel est connecté ledit au moins un équipement principal via un deuxième canal de communication sans fil. Cet équipement comprend un module d'activation d'au moins une interface de communication de la passerelle résidentielle à laquelle l'équipement principal est apte à se connecter. L'interface de communication est distincte d'une interface de communication à laquelle est associé le deuxième canal de communication sans fil. Le module d'activation est configuré pour :
- transmettre audit au moins un équipement principal un message de commande sur le premier canal de communication sans fil, et
- transmettre à la passerelle résidentielle une requête d'activation de ladite au moins une interface de communication sur le deuxième canal de communication sans fil.

L'invention concerne également un produit programme d'ordinateur comprenant des instructions de code de programme pour la mise en œuvre du procédé d'activation tels que décrit précédemment, lorsqu'il est exécuté par un processeur.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un exemple de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.). Par la suite, on entend par ressources tous ensembles d'éléments matériels et/ou logiciels support d'une fonction ou d'un service, qu'ils soient unitaires ou combinés.

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware » en anglais), etc.

Chaque composante du système précédemment décrit met bien entendu en œuvre ses propres modules logiciels.

L'invention concerne également un système d'activation d'au moins une interface de communication d'une passerelle résidentielle d'un réseau de communication local auquel est connecté au moins un équipement principal configuré pour se connecter à ladite au moins une interface de communication de la passerelle résidentielle. Ce système comprend une passerelle résidentielle et au moins un équipement, dit équipement secondaire, tel que décrit précédemment.

Les différents modes de réalisation mentionnés ci-dessus sont combinables entre eux pour la mise en œuvre de la présente technique.

L'équipement, le programme d'ordinateur, et le système correspondants précités présentent au moins les mêmes avantages que ceux conférés par le procédé d'activation d'au moins une interface de communication d'une passerelle résidentielle selon la présente invention.

### 4. Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- [Fig.1] : la [Fig.1] illustre un exemple d'environnement de mise en œuvre de l'invention selon un mode particulier de réalisation;
- [Fig.2A] : la [Fig.2A] illustre un exemple d'architecture d'un système d'activation d'une interface de communication d'une passerelle de gestion du réseau de communication local selon un mode de réalisation de l'invention;
- [Fig.2B] : la [Fig.2B] illustre un exemple d'architecture d'un système d'activation d'une interface de communication d'une passerelle de gestion du réseau de communication selon un mode particulier de réalisation de l'invention;
- [Fig.3] : la [Fig.3] illustre de façon schématique un exemple de hiérarchisation d'un profil propriétaire d'un protocole de communication sans fil selon un mode de réalisation de l'invention.
- [Fig.4] : la [Fig.4] présente sous forme d'un diagramme de flux les échanges entre un module d'activation d'au moins une interface de communication de la passerelle résidentielle d'un équipement secondaire, un équipement principal, et la passerelle de gestion du réseau de communication local, selon un exemple de réalisation de l'invention
- [Fig.5] : illustrent de façon schématique un exemple d'architecture d'un équipement connecté au réseau local intégrant un module d'activation d'au moins une interface de communication de la passerelle résidentielle, selon un mode de réalisation de l'invention.

### 5. Description détaillée de l'invention

Le principe général de l'invention repose sur le réveil, ou l'activation, dynamique d'une interface de communication de la passerelle résidentielle désactivée par défaut, telle que l'interface de communication sans fil WiFi 5GHz, en utilisant les interactions possibles entre la passerelle et différents équipements utilisateurs, comme par exemple une télécommande d'un décodeur numérique (ou « Set Top Box » STB en anglais), un téléphone intelligent, une tablette etc....

Plus particulièrement, l'invention permet de tirer avantage de la présence d'une ou plusieurs autre(s) interface(s) de communication déjà active(s) au sein de la passerelle résidentielle, comme par exemple une interface de communication utilisant un protocole de communication sans fil Bluetooth faible énergie (« *Bluetooth Low Energy* » en anglais, ou BLE), pour activer, uniquement lorsque cela est nécessaire, une interface de communication désactivée par défaut, telle que l'interface de communication sans fil WiFi 5 GHz.

Pour cela, l'invention repose sur une transmission par un équipement, dit équipement secondaire, d'un message de commande d'un équipement du réseau de communication, dit équipement principal, et d'une requête de réveil, ou d'activation, d'au moins une interface de communication désactivée de la passerelle résidentielle.

Autrement dit, lorsque l'utilisateur souhaite utiliser un équipement du réseau de communication, dit équipement principal, pour accéder à un service nécessitant une connexion à une interface de communication de la passerelle résidentielle, qui est à l'état inactif, il peut utiliser un autre équipement, dit équipement secondaire, configuré pour se connecter et communiquer avec l'équipement principal d'une part et la passerelle résidentielle d'autre part, via un canal de communication associé à une autre interface de communication active de la passerelle, distincte de l'interface de communication désactivée.

Grâce à cet équipement secondaire et à la présence d'interfaces de communication déjà actives au sein de la passerelle, un message de commande de l'équipement principal et une requête de réveil, ou d'activation, de l'interface de communication désactivée de la passerelle résidentielle sont transmis par l'équipement secondaire.

Selon une variante de l'invention, cette requête de réveil, ou d'activation, de l'interface de communication désactivée de la passerelle résidentielle est transmise préalablement à la transmission du message de commande de l'équipement principal. L'interface de communication de la passerelle résidentielle est alors active avant l'activation de l'équipement principal.

Ainsi, l'équipement principal peut se connecter dès son réveil à l'interface de communication de la passerelle résidentielle désormais activée. En d'autres termes, l'activation de l'interface de communication de la passerelle dont l'équipement principal a besoin intervient préalablement à l'activation de l'équipement principal par l'utilisateur, ce qui permet d'éviter les temps de latence, tout en garantissant la diminution de la consommation d'énergie.

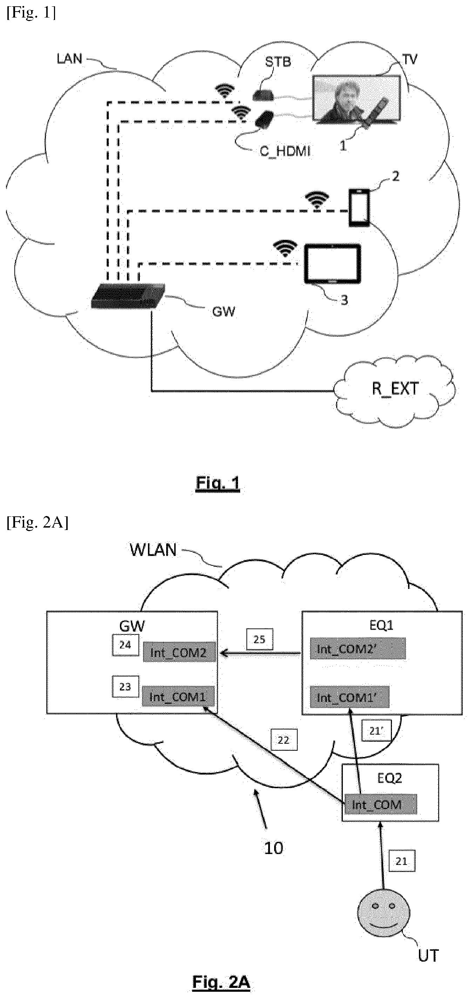

On présente désormais, en relation avec la [Fig.1] un exemple d'environnement de mise en œuvre de l'invention selon un mode particulier de réalisation.

L'environnement illustré en [Fig.1] comprend notamment un réseau de communication local LAN qui est géré par une passerelle résidentielle GW connectée à un réseau de communication de données R_EXT d'un opérateur.

Dans cet exemple, le réseau LAN est un réseau domestique, auquel sont connectés plusieurs équipements tels que :
- un décodeur numérique STB associé à une télécommande 1 permettant de contrôler à distance le décodeur numérique STB, via par exemple une connexion sans fil Bluetooth Low Energy,
- une clé HDMI C_HDMI,
- un téléphone intelligent 2 ( ou « smartphone » en anglais),
- une tablette 3.

Le décodeur numérique STB et la clé HDMI C_HDMI sont connectés à un téléviseur TV permettant la restitution d'un contenu vidéo, comme par exemple un film.

Dans un exemple, le décodeur numérique STB, la clé HDMI C_HDMI, le téléphone 2, la tablette 3 sont connectés à la passerelle GW par une liaison sans fil radio dans réseau de communication local sans fil WLAN, par exemple WiFi sur une fréquence 2,4 GHz ou 5 GHz. Bien sûr d'autres types de liaison sans fil peuvent être utilisés comme WiFi sur une fréquence 6GHz, Bluetooth, Bluetooth Low Energy, z-wave, zigbee, DECT-ULE (« *Digital Enhanced Cordless Telecommunications - Ultra Low Energy* » en anglais ou télécommunications numériques améliorées sans fil, 4G, 5G ou Li-Fi etc.

Dans un autre exemple, le décodeur numérique STB est connecté à la passerelle GW par une connexion filaire, telle qu'une connexion Ethernet.

Afin d'établir une communication entre les différents équipements du réseau, ou avec des équipements en dehors du réseau de communication, et la passerelle résidentielle GW, celle-ci comprend plusieurs interfaces de communication filaire ou sans fil. Plus particulièrement, ces différentes interfaces de communication utilisent des protocoles de communication différents permettant d'établir différents canaux de communication entre la passerelle et les équipements du réseau ou hors réseau.

Dans un exemple, la passerelle comprend une interface de communication sans fil permettant d'établir un canal de communication basé sur un protocole de communication de type Bluetooth Low Energy avec l'un des équipements du réseau comme par exemple le téléphone intelligent 2 ou bien un équipement n'appartenant pas au réseau de communication, mais configuré pour commander un équipement du réseau de communication, comme par exemple la télécommande 1.

La passerelle GW peut comprendre également une interface de communication WiFi 5GHz permettant d'établir une connexion sans fil WiFi sur une fréquence de 5GHz avec, par exemple, la clé HDMI C_HDMI ou le décodeur numérique STB.

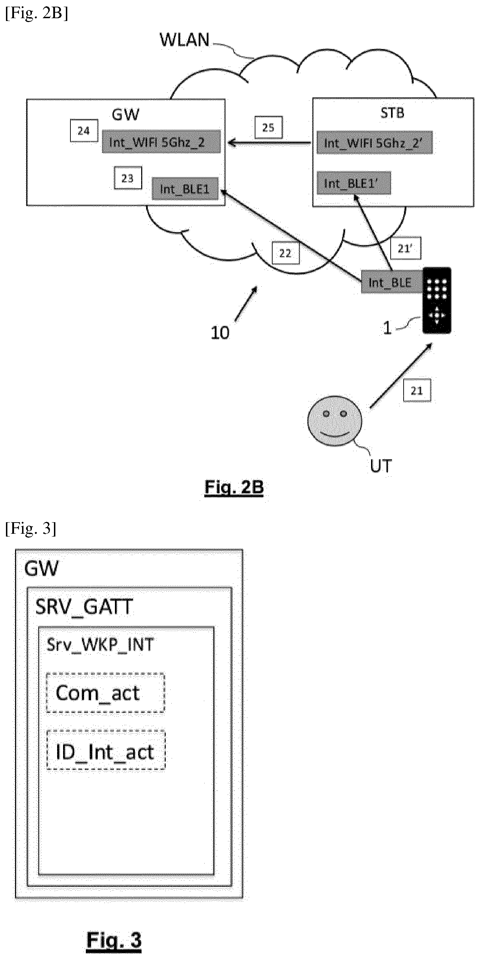

La [Fig.2A] et la [Fig.2B] illustrent des exemples d'architecture d'un système de gestion 10 d'un système d'activation d'au moins une interface de communication d'une passerelle de gestion du réseau de communication local selon des modes de réalisation de l'invention.

Ce système de gestion 10 comprend entre autres la passerelle GW de gestion du réseau de communication sans fil WLAN, ou passerelle résidentielle, ainsi que plusieurs équipements, dont au moins un équipement principal EQ1 appartenant à ce réseau de communication, comme par exemple un décodeur numérique STB, une clé HDMI C_HDMI, et au moins un équipement secondaire EQ2 appartenant au réseau de communication, comme par exemple un téléphone intelligent 2, ou bien n'appartenant pas au réseau de communication, comme par exemple une télécommande 1. On notera que la notion d'appartenance au réseau sous-tend la notion de protocole IP : à ce titre, la télécommande n'appartient pas au réseau local, bien qu'elle soit un équipement « local » géographiquement, ce qui permet d'utiliser des liaisons radio de courte distance dans un mode de réalisation de l'invention.

On entend par équipement principal EQ1, un équipement du réseau de communication WLAN que l'utilisateur souhaite utiliser pour accéder à un service via la passerelle résidentielle GW, tel qu'un service de consommation de contenu numérique par exemple. L'équipement principal EQ1 est configuré pour se connecter via une interface de communication Int_COM2' à une interface de communication Int_COM2 de la passerelle résidentielle GW pour accéder au service demandé. Lorsque l'interface de communication Int_COM2 de la passerelle n'est pas utilisée, c'est-à-dire lorsqu'aucun équipement du réseau n'y est connecté, celle-ci est par défaut désactivée pour économiser de l'énergie.

Dans l'exemple en lien avec la [Fig.2B], l'équipement principal EQ1 est par exemple le décodeur numérique STB, et l'interface de communication de la passerelle résidentielle Int_COM2 et l'interface de communication du décodeur numérique Int_COM2' sont des interfaces de communication sans fil de type WiFi 5GHz. Par défaut, pour économiser de l'énergie, l'interface de communication sans fil WiFi 5GHz de la passerelle GW est désactivée.

Le décodeur numérique STB est donc configuré pour se connecter et échanger des données avec la passerelle résidentielle GW via une connexion entre leur interface de communication sans fil WiFi 5GHz Int_WiFi SGHz 2 et Int_WiFi 5GHz_2'. En effet, le décodeur numérique STB fait partie des équipements compatibles avec la fréquence WiFi 5 GHz de la passerelle résidentielle GW, ce qui permet de recevoir du contenu numérique en WiFi 5GHz entre la passerelle GW et le décodeur numérique STB.

En variante, l'interface de communication de la passerelle résidentielle Int_COM2 et l'interface de communication du décodeur numérique Int_COM2' sont des interfaces de communication filaire de type Ethernet.

On entend par équipement secondaire EQ2, un équipement appartenant ou non au réseau de communication WLAN utilisé par l'utilisateur pour contrôler l'équipement principal EQ1. L'équipement secondaire EQ2 est configuré pour se connecter, via une interface de communication Int_COM, à une interface de communication sans fil Int_COM1' de l'équipement principal EQ1. Autrement dit, l'équipement secondaire EQ2 communique avec l'équipement principal EQ1, via un canal de communication sans fil établi entre les interfaces de communication Int_COM de l'équipement secondaire EQ2 et l'interface de communication Int_COM1' de l'équipement principal EQ1.

L'interface de communication sans fil Int_COM de l'équipement secondaire EQ2 est également configurée pour établir une connexion avec une interface de communication sans fil déjà activée Int_COM1 de la passerelle résidentielle GW.

Dans l'exemple en lien avec la [Fig.2B], la télécommande 1 est l'équipement secondaire EQ2 qui communique avec :
- le décodeur numérique STB, qui est alors l'équipement principal EQ1, via un canal de communication sans fil de type BLE établi entre les interfaces de communication Int_BLE de la télécommande 1 et l'interface de communication Int_BLE1' du décodeur numérique STB, et
- la passerelle GW via un canal de communication sans fil de type BLE établi entre des interfaces de communication Int_BLE et Int_BLE1.

En variante, les interfaces de communication sans fil de la passerelle Int_COM1, de l'équipement secondaire Int_COM et de l'équipement principal Int_COM1' peuvent être n'importe quel type d'interface de communication sans fil radio permettant à l'équipement secondaire EQ2 de communiquer avec la passerelle résidentielle GW et l'équipement principal EQ1 comme par exemple une interface de communication de type Bluetooth, z-wave, zigbee, DECT-ULE, WiFi 2.4GHz ou 6GHz, Li-Fi, 4G, 5G etc.

En d'autres termes, l'équipement secondaire EQ2 peut communiquer avec l'équipement principal EQ1 via un premier canal de communication et avec la passerelle résidentielle GW via un deuxième canal de communication, ces deux canaux pouvant utiliser le même protocole de communication, ou des protocoles de communication différents.

Le principe général de l'invention est présenté en lien avec les exemples de la [Fig.2A] et de la [Fig.2B].

Dans ces exemples, l'utilisateur UT souhaite accéder à un service via la passerelle résidentielle GW, comme par exemple un service de consommation de contenu numérique. Pour cela, l'utilisateur UT utilise l'équipement secondaire EQ2 pour contrôler l'équipement principal EQ1 et l'activer.

Ainsi, de manière classique et connue de l'art antérieur, dans une étape 21, l'utilisateur UT active l'équipement principal EQ1 grâce à l'équipement secondaire EQ2 configuré pour contrôler l'équipement principal EQ1. Sur demande de l'utilisateur, l'équipement secondaire EQ2 transmet dans une étape 21', un message de commande de l'équipement principal EQ1 à celui-ci. Dans un exemple, ce message de commande de l'équipement principal EQ1 est transmis via un canal de communication sans fil établi entre l'interface de communication Int_COM de l'équipement secondaire EQ2 et l'interface de communication Int_COM1' de l'équipement principal EQ1. Ce canal de communication sans fil est par exemple un canal de communication de type BLE.

Dans l'exemple en lien avec la [Fig.2B], en appuyant par exemple sur un bouton marche/arrêt, ou sur un bouton sorti de veille de la télécommande 1, l'utilisateur UT envoie donc un message de commande du décodeur numérique STB, via par exemple l'établissement d'un canal de communication sans fil de type BLE, entre une interface de communication de type BLE Int_BLE de la télécommande 1 et une interface de communication de type BLE Int_BLE1' du décodeur numérique STB.

Afin de réduire la consommation d'énergie, un ou plusieurs interfaces de communication de la passerelle résidentielle GW sont désactivées par défaut, par exemple des interfaces de communication filaire de type Ethernet, ou sans fil de type WiFi 5GHz.

Ainsi, dans une étape 22, l'équipement secondaire EQ2 transmet une requête de connexion à l'interface de communication Int_COM1 de la passerelle résidentielle GW via un canal de communication par exemple de type BLE, préalablement à la transmission d'une requête d'activation de l'interface de communication Int_COM2 de la passerelle résidentielle GW. L'équipement secondaire EQ2 se connecte via son interface de communication sans fil Int_COM à une interface de communication sans fil Int_COM1 de la passerelle résidentielle GW déjà active. En effet, la passerelle résidentielle comprend également une ou plusieurs autres interfaces de communication moins gourmandes en énergie qui sont actives par défaut et qui permettent à certains équipements de communiquer et échanger des données avec la passerelle résidentielle GW.

Préalablement à la transmission d'un message de commande de l'équipement principal EQ1, l'équipement secondaire EQ2 transmet à destination de la passerelle GW, la requête d'activation d'une ou plusieurs interfaces de communication de la passerelle résidentielle préalablement désactivée Int_COM2. On notera qu'en variante la requête d'activation et le message de commande peuvent être transmis conjointement, ou la requête d'activation peut être transmise après le message de commande.

Cette requête d'activation de l'interface de communication préalablement désactivée de la passerelle résidentielle Int_COM2 comprend une information d'activation de cette interface de communication de la passerelle résidentielle Int_COM2.

En variante, cette requête d'activation de l'interface de communication de la passerelle résidentielle Int_COM2 comprend également une information de sortie de veille profonde de la passerelle résidentielle GW.

En variante, cette requête d'activation de l'interface de communication de la passerelle résidentielle Int_COM2 comprend également un identifiant de l'interface de communication de la passerelle résidentielle GW à activer.

Dans l'exemple en lien avec la [Fig.2B], l'interface de communication sans fil BLE Int_BLE de la télécommande 1, se connecte à l'interface de communication sans fil BLE Int _BLE1 de la passerelle résidentielle GW. Sur demande de l'utilisateur, préalablement à la transmission du message de commande du décodeur numérique STB, la télécommande 1 transmet via un canal de communication de type BLE, une requête d'activation de l'interface de communication WiFi 5GHz Int_WiFi 5GHz_2 de la passerelle résidentielle GW à cette dernière.

Dans une étape 23, l'interface de communication active Int_COM1 de la passerelle résidentielle GW décode la requête d'activation de l'interface de communication préalablement désactivée Int_COM2.

Dans l'exemple en lien avec la [Fig.2B], c'est l'interface de communication BLE Int_BLE1 de la passerelle GW qui décode la requête d'activation de l'interface de communication sans fil WiFi 5GHz Int_WiFi 5GHz_2.

Dans une étape 24, sur réception de la requête d'activation de l'interface de communication Int_COM2 en provenance de l'équipement secondaire EQ2, la passerelle résidentielle GW active l'interface de communication Int_COM2, comme par exemple l'interface de communication WiFi 5GHz Int_WiFi 5GHz_2 de la [Fig.2B].

En variante, lorsque la requête d'activation comprend une information d'activation de l'interface de communication préalablement désactivée Int_COM2 et une information de sortie de veille profonde de la passerelle résidentielle GW, la passerelle résidentielle GW sort de veille profonde, puis active son interface de communication Int_COM2.

Dans une étape 25, l'équipement principal EQ1 se connecte via son interface de communication Int_COM2' à l'interface Int_COM2 activée de la passerelle résidentielle GW pour établir une communication et échanger des données.

Dans l'exemple en lien avec la [Fig.2B], le décodeur numérique STB se connecte au réseau WLAN via une connexion entre son interface de communication compatible WiFi 5GHz Int_5GHz_2' et l'interface de communication WiFi 5 GHz Int_WiFi 5GHz_2 activée de la passerelle résidentielle GW.

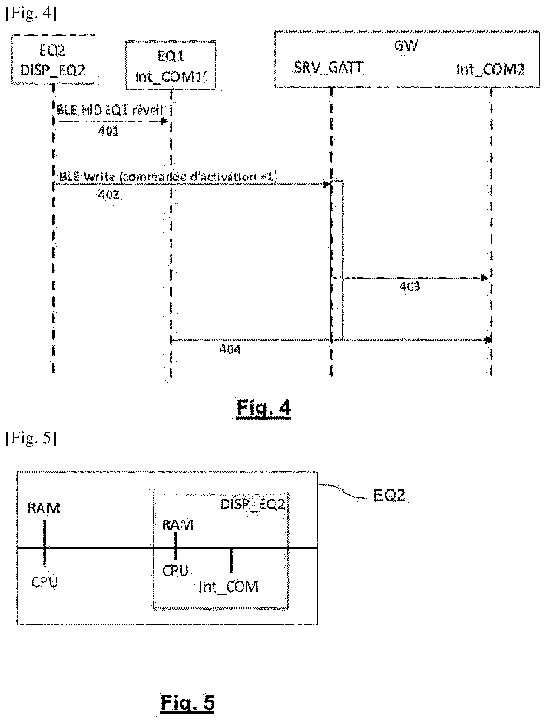

La [Fig.3] illustre un exemple de hiérarchisation d'un profil propriétaire d'un protocole de communication sans fil selon un mode de réalisation de l'invention. En particulier, la [Fig.3] illustre la hiérarchisation d'un profil propriétaire selon un protocole de communication Bluetooth Low Energy ou BLE dans l'exemple en lien avec la [Fig.2B] et la [Fig.4], utilisé pour l'établissement d'une communication entre l'équipement secondaire EQ2, tel que la télécommande 1, et la passerelle résidentielle GW d'une part, et l'équipement principal EQ1, tel que le décodeur numérique STB d'autre part.

La spécification du standard BLE prévoit la possibilité de créer des profils propriétaires respectant le protocole de profil d'attribut générique (« *Generic Attribute Protocol* » en anglais ou GATT). Un profil est défini dans la norme GATT comme un ensemble de services et de caractéristiques permettant de réaliser certaines applications. Il est donc possible de définir des caractéristiques propriétaires supportées par un serveur GATT, utilisant des identifiants uniques universels (« *Universally Unique Identifier* » en anglais ou UUID) spécifiques.

La passerelle résidentielle GW met en œuvre un tel profil dit « propriétaire » de serveur GATT SRV_GATT permettant de réveiller, ou activer, des interfaces de communication de la passerelle GW préalablement désactivée pour économiser de l'énergie. En d'autres termes, la passerelle résidentielle GW met en œuvre un service de réveil, ou d'activation de ses interfaces de communication préalablement désactivée Srv_WKP_INT.

Sur demande de l'utilisateur UT, le client GATT, c'est-à-dire dans les exemples présentés en lien avec les figures 2A, 2B et 4, l'équipement secondaire EQ2 ou télécommande 1, vient ensuite modifier les valeurs des attributs accessibles en écriture des caractéristiques définies dans le profil propriétaire. Dans un exemple, une caractéristique définie dans le profil propriétaire peut être une commande d'activation d'une ou plusieurs interfaces de communication de la passerelle GW désactivée(s) par défaut COM_act. Après sélection de l'identifiant propriétaire associé au profil, le client GATT modifie la valeur, par exemple entier « 0 » ou « 1 », attribuée à la caractéristique de commande d'activation COM_act, pour déclencher le processus d'activation de l'interface de communication de la passerelle GW.

Pour cela, le client GATT, c'est-à-dire l'équipement secondaire EQ2, transmet à destination de la passerelle résidentielle GW, en particulier au serveur GATT de la passerelle, une requête d'activation, ou réveil, d'au moins une interface de communication désactivée par défaut de cette passerelle. Cette requête d'activation, ou réveil, comprend notamment une information d'activation d'au moins une interface de communication désactivée par défaut, permettant la modification de la valeur de la caractéristique de commande d'activation COM_act du profil propriétaire et donc l'activation de l'interface de communication d'intérêt.

En variante, il est possible de définir une caractéristique supplémentaire, par exemple pour sélectionner l'interface de communication de la passerelle GW devant être réveillée, ou activée. De la même manière que précédemment, après sélection de l'identifiant propriétaire associé au profil, le client GATT modifie la valeur, par exemple « wlan0 » ou « wlan1 », « eth0 » ou « eth1 », attribuée à la caractéristique d'identification de l'interface de communication à activer ID_Int_act, pour déclencher le processus d'activation de l'interface de communication de la passerelle GW choisie.

Pour cela, la requête d'activation, ou réveil, d'au moins une interface de communication désactivée par défaut de cette passerelle envoyée par le client GATT comprend en outre une information d'identification d'au moins une interface de communication de la passerelle, permettant la modification de la valeur de la caractéristique d'identification de l'interface de communication à activer ID_Int_act du profil propriétaire et donc l'activation de l'interface de communication d'intérêt.

La [Fig.4] illustre sous forme d'un diagramme de flux les échanges entre un module d'activation d'au moins une interface de communication de la passerelle résidentielle de l'équipement secondaire, l'équipement principal, et la passerelle de gestion du réseau de communication local, selon un exemple de réalisation de l'invention.

Dans l'exemple en lien avec la [Fig.4], le module d'activation d'au moins une interface de communication de la passerelle de l'équipement secondaire DISP_EQ2, ou module d'activation DISP_EQ2, présenté en lien avec la [Fig.5], comprend une interface de communication Int_COM, par exemple une interface de communication de type BLE, permettant l'établissement d'une connexion entre l'équipement secondaire EQ2 et l'équipement principal EQ1.

Ainsi, dans une étape 401, l'utilisateur UT active l'équipement principal EQ1 grâce à l'équipement secondaire EQ2 configuré pour contrôler l'équipement principal EQ1. Pour cela, l'équipement secondaire EQ2, via l'établissement d'un canal de communications sans fil entre l'interface de communication Int_COM de son module d'activation DISP_EQ2 et l'interface de communication Int_COM1' de l'équipement principal EQ1, transmet un message de commande à destination de l'équipement principal EQ1.

Dans un exemple, le message de commande de l'équipement principal EQ1 peut être un message de commande de type : BLE HID EQ1 réveil.

Dans une étape 402, préalablement à la transmission du message de commande de l'équipement principal EQ1, l'équipement secondaire EQ2 transmet à destination de la passerelle résidentielle, via l'interface de communication Int_COM de son module d'activation DISP_EQ2, une requête d'activation, ou réveil, d'une ou plusieurs interface(s) de communication de la passerelle résidentielle préalablement désactivée(s).

Dans un exemple, cette requête d'activation d'au moins une interface de communication préalablement désactivée de la passerelle GW comprend une information d'activation de l'interface de communication préalablement désactivée, et est de type : BLE Write (commande d'activation =1).

En variante, cette requête d'activation comprend également un identifiant de l'interface de communication à activer, par exemple une ou plusieurs interfaces de communication sans fil « wlan1 » ou filaire « eth1 ».

Dans une étape 403, la passerelle résidentielle GW commande l'activation de la ou les interface(s) de communication Int_COM2 de la passerelle GW.

Dans une étape 404, l'équipement principal EQ1 se connecte alors au réseau WLAN via son interface de communication Int_COM2' à l'interface Int_COM2 activée de la passerelle résidentielle GW.

Afin d'illustrer plus précisément le principe de l'invention, la [Fig.5] présente de façon schématique un exemple d'architecture d'un équipement secondaire EQ2 intégrant un module d'activation d'au moins une interface de communication de la passerelle résidentielle DISP_EQ2 selon un mode de réalisation de l'invention.

Le module d'activation DISP_EQ2 comprend une mémoire vive RAM (par exemple une mémoire RAM), une unité de traitement CPU équipée par exemple d'un processeur, et pilotée par un programme d'ordinateur stocké dans une mémoire morte (par exemple une mémoire ROM ou un disque dur). A l'initialisation, les instructions de code du programme d'ordinateur sont par exemple chargées dans la mémoire vive RAM avant d'être exécutées par le processeur de l'unité de traitement CPU.

Le module d'activation DISP_EQ2 comprend en outre une interface de communication sans fil Int_COM permettant à l'équipement secondaire d'établir une communication.

La [Fig.5] illustre seulement une manière particulière, parmi plusieurs possibles, de réaliser le module d'activation DISP_EQ2, afin qu'il effectue les étapes des procédés d'activation d'au moins une interface de communication de la passerelle GW détaillé ci-dessus, en relation avec les figures 2A, 2B et 4 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le module d'activation DISP_EQ2 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

## Revendications

1. Procédé d'activation d'au moins une interface de communication (Int_COM2) d'une passerelle résidentielle (GW) d'un réseau de communication local (LAN) auquel est connecté au moins un équipement principal (EQ1) configuré pour se connecter à ladite au moins une interface de communication (Int_COM2) de ladite passerelle résidentielle, ledit procédé étant mis en œuvre par au moins un équipement secondaire (EQ2) configuré pour communiquer avec ledit au moins un équipement principal (EQ1) via un premier canal de communication sans fil, et avec ladite passerelle résidentielle (GW) via un deuxième canal de communication sans fil associé à au moins une autre interface de communication (Int_COM1) de ladite passerelle résidentielle (GW), ledit procédé comprend :
- une transmission audit au moins un équipement principal (EQ1), sur ledit premier canal de communication sans fil, d'un message de commande dudit au moins un équipement principal (EQ1) et,
- une transmission à ladite passerelle résidentielle (GW), sur ledit deuxième canal de communication sans fil, d'une requête d'activation de ladite au moins une interface de communication (Int_COM2) .

2. Procédé d'activation selon la revendication 1, ladite requête d'activation de ladite au moins une interface de communication (Int_COM2) est transmise préalablement à ladite transmission audit au moins un équipement utilisateur principal (EQ1) dudit message de commande dudit au moins un équipement principal (EQ1).

3. Procédé d'activation selon l'une quelconque des revendications 1 ou 2, ladite requête d'activation de ladite au moins une interface de communication (Int_COM2) comprend une information d'activation de ladite au moins une interface de communication (Int_COM2).

4. Procédé d'activation selon la revendication 3, ladite requête d'activation de ladite au moins une interface de communication (Int_COM2) comprend en outre une information d'identification de ladite au moins une interface de communication (Int_COM2).

5. Procédé d'activation selon l'une quelconque des revendications 1 à 4, ledit premier canal de communication sans fil et ledit deuxième canal de communication sans fil sont fondés sur un protocole de communication choisi parmi : Bluetooth, Bluetooth Low Energy, Z-wave, Zigbee, DECT-ULE, Li-Fi, 4G, 5G ou WiFi 6GHz.

6. Procédé d'activation selon l'une quelconque des revendications 1 à 5, ledit premier canal de communication sans fil et ledit deuxième canal de communication sans fil sont fondés sur un même protocole de communication.

7. Équipement (EQ) configuré pour communiquer avec un équipement principal (EQ1) via un premier canal de communication sans fil, et avec une passerelle résidentielle (GW) d'un réseau de communication local (LAN) auquel est connecté ledit au moins un équipement principal (EQ1) via un deuxième canal de communication sans fil, ledit équipment comprend un module d'activation (DISP_EQ2) d'au moins une interface de communication (Int_COM2) de ladite passerelle résidentielle (GW) à laquelle ledit équipement principal (EQ1) est apte à se connecter, ladite interface de communication étant distincte d'une interface de communication à laquelle est associé ledit deuxième canal de communication sans fil, et ledit module d'activation est configuré pour :
- transmettre audit au moins un équipement principal (EQ1) un message de commande sur ledit premier canal de communication sans fil, et
- transmettre à ladite passerelle résidentielle (GW) une requête d'activation de ladite au moins une interface de communication (Int_COM2) sur ledit deuxième canal de communication sans fil.

8. Produit programme d'ordinateur comprenant des instructions de code de programme pour la mise en œuvre d'un procédé selon l'une quelconque des revendications 1 à 6, lorsqu'il est exécuté par un processeur.

9. Système (10) d'activation d'au moins une interface de communication (Int_COM2) d'une passerelle résidentielle (GW) d'un réseau de communication local (LAN) auquel est connecté au moins un équipement principal (EQ1) configuré pour se connecter à ladite au moins une interface de communication (Int_COM2) de ladite passerelle résidentielle (GW), ledit système comprend une passerelle résidentielle (GW) et au moins un équipement, dit équipement secondaire (EQ2),selon la revendication 7.

## Patentansprüche

1. Verfahren zur Aktivierung mindestens einer Kommunikationsschnittstelle (Int_COM2) eines Home-Gateways (GW) eines lokalen Kommunikationsnetzes (LAN), mit dem mindestens eine Haupteinrichtung (EQ1) verbunden ist, die dazu ausgestaltet ist, sich mit der mindestens einen Kommunikationsschnittstelle (Int_COM2) des Home-Gateways zu verbinden, wobei das Verfahren von mindestens einer sekundären Einrichtung (EQ2) ausgeführt wird, die dazu ausgestaltet ist, mit der mindestens einen Haupteinrichtung (EQ1) über einen ersten drahtlosen Kommunikationskanal und mit dem Home-Gateway (GW) über einen zweiten drahtlosen Kommunikationskanal, der mindestens einer anderen Kommunikationsschnittstelle (Int_COM1) des Home-Gateways (GW) zugeordnet ist, zu kommunizieren, wobei das Verfahren umfasst:
- eine Übertragung einer Nachricht zur Steuerung der mindestens einen Haupteinrichtung (EQ1) über den ersten drahtlosen Kommunikationskanal an die mindestens eine Haupteinrichtung (EQ1) und
- eine Übertragung einer Anforderung zur Aktivierung der mindestens einen Kommunikationsschnittstelle (Int_COM2) über den zweiten drahtlosen Kommunikationskanal an das Home-Gateway (GW).

2. Verfahren zur Aktivierung nach Anspruch 1,
wobei die Anforderung zur Aktivierung der mindestens einen Kommunikationsschnittstelle (Int_COM2) vor der Übertragung der Nachricht zur Steuerung der mindestens einen Haupteinrichtung (EQ1) an die mindestens eine Hauptbenutzereinrichtung (EQ1) übertragen wird.

3. Verfahren zur Aktivierung nach einem der Ansprüche 1 oder 2,
wobei die Anforderung zur Aktivierung der mindestens einen Kommunikationsschnittstelle (Int_COM2) eine Information zur Aktivierung der mindestens einen Kommunikationsschnittstelle (Int_COM2) umfasst.

4. Verfahren zur Aktivierung nach Anspruch 3,
wobei die Anforderung zur Aktivierung der mindestens einen Kommunikationsschnittstelle (Int_COM2) ferner eine Information zur Identifizierung der mindestens einen Kommunikationsschnittstelle (Int_COM2) umfasst.

5. Verfahren zur Aktivierung nach einem der Ansprüche 1 bis 4,
wobei der erste drahtlose Kommunikationskanal und
der zweite drahtlose Kommunikationskanal auf einem Kommunikationsprotokoll beruhen, das ausgewählt ist aus: Bluetooth, Bluetooth Low Energy, Z-wave, Zigbee, DECT-ULE, Li-Fi, 4G, 5G oder WiFi 6GHz.

6. Verfahren zur Aktivierung nach einem der Ansprüche 1 bis 5,
wobei der erste drahtlose Kommunikationskanal und
der zweite drahtlose Kommunikationskanal auf einem selben Kommunikationsprotokoll beruhen.

7. Einrichtung (EQ), die dazu ausgestaltet ist, mit einer Haupteinrichtung (EQ1) über einen ersten drahtlosen Kommunikationskanal und mit einem Home-Gateway (GW) eines lokalen Kommunikationsnetzes (LAN), mit dem die mindestens eine Haupteinrichtung (EQ1) verbunden ist, über einen zweiten drahtlosen Kommunikationskanal zu kommunizieren,
wobei die Einrichtung umfasst ein Modul zur Aktivierung (DISP_EQ2) mindestens einer Kommunikationsschnittstelle (Int_COM2) des Home-Gateways (GW), mit dem sich die Haupteinrichtung (EQ1) verbinden kann, umfasst, wobei die Kommunikationsschnittstelle von einer Kommunikationsschnittstelle verschieden ist, welcher der drahtlose Kommunikationskanal zu geordnet ist, und wobei das Aktivierungsmodul dazu ausgestaltet ist:
- an die mindestens eine Haupteinrichtung (EQ1) eine Nachricht zur Steuerung über den ersten drahtlosen Kommunikationskanal zu übertragen und
- an das Home-Gateway (GW) eine Anforderung zur Aktivierung der mindestens einen Kommunikationsschnittstelle (Int_COM2) über den zweiten drahtlosen Kommunikationskanal zu übertragen.

8. Computerprogrammprodukt, das Programmcodeanweisungen umfasst, die bei seiner Ausführung durch einen Prozessor das Verfahren nach einem der Ansprüche 1 bis 6 durchführen.

9. System (10) zur Aktivierung mindestens einer Kommunikationsschnittstelle (Int_COM2) eines Home-Gateways (GW) eines lokalen Kommunikationsnetzes (LAN), mit dem mindestens eine Haupteinrichtung (EQ1) verbunden ist, die dazu ausgestaltet ist, sich mit der mindestens einen Kommunikationsschnittstelle (Int_COM2) des Home-Gateways (GW) zu verbinden, wobei das System ein Home-Gateway (GW) und mindestens eine Einrichtung, sekundäre Einrichtung (EQ2) genannt, nach Anspruch 7 umfasst.

## Claims

1. Method for activating at least one communication interface (Int_COM2) of a home gateway (GW) of a local area network (LAN) to which at least one main equipment (EQ1) configured to connect to said at least one communication interface (Int_COM2) of said home gateway is connected, said method being implemented by at least one secondary equipment (EQ2) configured to communicate with said at least one main equipment (EQ1) via a first wireless communication channel, and with said home gateway (GW) via a second wireless communication channel associated with at least one other communication interface (Int_COM1) of said home gateway (GW), said method comprising:
- transmitting, to said at least one main equipment (EQ1), over said first wireless communication channel, a message for controlling said at least one main equipment (EQ1), and
- transmitting, to said home gateway (GW), over said second wireless communication channel, a request to activate said at least one communication interface (Int_COM2).

2. Activation method according to Claim 1,
said request to activate said at least one communication interface (Int_COM2) being transmitted prior to said transmission, to said at least one main user equipment (EQ1), of said message for controlling said at least one main equipment (EQ1).

3. Activation method according to either one of Claims 1 and 2,
said request to activate said at least one communication interface (Int_COM2) comprising information for activating said at least one communication interface (Int_COM2).

4. Activation method according to Claim 3,
said request to activate said at least one communication interface (Int_COM2) further comprising information for identifying said at least one communication interface (Int_COM2).

5. Activation method according to any one of Claims 1 to 4,
said first wireless communication channel and
said second wireless communication channel being based on a communication protocol chosen from among: Bluetooth, Bluetooth Low Energy, Z-wave, Zigbee, DECT-ULE, Li-Fi, 4G, 5G or Wi-Fi 6 GHz.

6. Activation method according to any one of Claims 1 to 5,
said first wireless communication channel and
said second wireless communication channel being based on the same communication protocol.

7. Equipment (EQ) configured to communicate with a main equipment (EQ1) via a first wireless communication channel, and with a home gateway (GW) of a local area network (LAN) to which said at least one main equipment (EQ1) is connected via a second wireless communication channel,
said equipment comprising a module (DISP_EQ2) for activating at least one communication interface (Int_COM2) of said home gateway (GW) to which said main equipment (EQ1) is able to connect, said communication interface being distinct from a communication interface with which said second wireless communication channel is associated, and said activation module being configured to:
- transmit, to said at least one main equipment (EQ1), a control message over said first wireless communication channel, and
- transmit, to said home gateway (GW), a request to activate said at least one communication interface (Int_COM2) over said second wireless communication channel.

8. Computer program product comprising program code instructions for implementing a method according to any one of Claims 1 to 6 when it is executed by a processor.

9. System (10) for activating at least one communication interface (Int_COM2) of a home gateway (GW) of a local area network (LAN) to which at least one main equipment (EQ1) configured to connect to said at least one communication interface (Int_COM2) of said home gateway (GW) is connected, said system comprising a home gateway (GW) and at least one equipment, referred to as a secondary equipment (EQ2), according to Claim 7.
